# EUROPEAN PATENT APPLICATION

(11) **EP 4 589 797 A1**
(43) Date of publication of application: **23.07.2025**
(21) Application number: 24152086.5
(22) Date of filing: 16.01.2024
(51) Int. Cl.: H02H 7/16, H02H 9/02, H02H 9/06, H02J 3/18, H02H 9/04

(54) **PROTECTION DEVICE FOR A SERIES COMPENSATION UNIT**

(71) Applicant: Hitachi Energy Ltd, 8050 Zürich (CH)
(72) Inventor: Augustin, Tim, 72359 Västerås (SE); Svensson, Jan, 72346 Västerås (SE)
(74) Representative: AWA Sweden AB

(57) **Abstract**

There is disclosed herein a protection device (100) adapted to protect a series compensation unit (SCU, 102) for a power line (2), wherein the protection device (100) comprises a mechanical switch (104), configured to close to thereby bypass the SCU (102), and a triggered spark gap (TSG, 106) connected across the mechanical switch 104, configured to trigger in response to a trigger signal. The actuator of the mechanical switch (104) is powered by an energization circuit (108) electrically connected in series between the SCU (102) and the TSG (106), or by at least one energy storage (118) in the series compensation unit (102). There is further disclosed herein a series compensation system (1) comprising such a protection device (100) arranged across a series compensation unit (102).

## Description

### Technical Field

The present disclosure relates to the protection of power grid installations. More particularly, the present disclosure relates to a protection device for a series compensation unit, and a series compensation unit comprising such a protection device.

### Background

Series compensation is a technique to improve the efficiency and stability of power grids by reducing the line reactance. It involves installing fixed series capacitors (FSC) in the middle or at the end of transmission lines. These capacitor installations may also be referred to as series compensation units (SCU). SCUs can increase the active power transfer and reduce losses. However, SCUs are vulnerable to fault currents, which can cause overvoltage and damage the capacitors. Therefore, SCUs require special protection schemes to bypass them during faults and prevent their failure.

Known techniques for protecting SCUs use spark gaps, such as triggered spark gaps, which can be triggered to form a bypass or discharge path across the SCU, to thereby redirect the fault current. This way, the fault current does not flow through the SCU, but through the bypass path, protecting the capacitors in the SCU from overvoltage.

### Summary

It is realized as a part of the present disclosure that exposed spark gaps are unreliable and potentially hazardous, especially considering that the platforms on which SCUs are installed may be geographically isolated and difficult to maintain, and hence vulnerable to environmental factors such as snow or debris.

Thus, the presently disclosed technique comprises a triggered spark gap (TSG) and a mechanical switch (which may also be referred to herein as simply a 'switch'). The triggered spark gap is a rapidly responsive component that can respond to a trigger signal (e.g., in response to a detected fault current or for other reasons). The mechanical switch comprises an actuator which enacts its closing, and is slower to respond and close, but provides a safer and more reliable conductive path for bypassing the SCU.

Thus, the TSG may only be required to conduct and withstand the current during a bypass procedure until the mechanical switch has been closed, which may be in the order of milliseconds. Accordingly, the triggered spark gap can be sized down relative to those of conventional techniques (which do not include an additional switch), and the spark gap can be housed in a more compact enclosure, for example with an ionizing gas, to protect the spark gap from the surrounding environment and to ensure a reliable triggering.

However, it is further realized as a part of the present disclosure that both the switch and the TSG require power and control circuits, which are difficult to install and isolate due to the SCU generally being at a high voltage level (e.g., in the order of kV). Specifically, the mechanical switch may require power to operate an actuator to thereby enact the closing of the switch, e.g., from a dedicated charged capacitor, and the TSG may further require power to activate the triggered spark gap, e.g., generating an initial triggering spark from a further dedicated charged capacitor.

Therefore, the present disclosure aims to provide an improved arrangement wherein the power and control circuits for the fast-responding protection device can be simplified, thereby improving their reliability and reducing their cost.

Viewed from one perspective, the present disclosure aims to provide power for the actuator of the switch from the energy stored in the SCU source, which may be referred to as a 'self-powered actuator' because the actuator of the switch is powered by the same system the switch is installed to protect, instead of a separate dedicated power source.

In particular, according to a first aspect of the present disclosure, there is provided a protection device adapted to protect a series compensation unit (SCU) for a power line, wherein the protection device comprises a mechanical switch comprising an actuator, configured to close to thereby bypass the series compensation unit, and a triggered spark gap (TSG) electrically connected across the mechanical switch, configured to trigger in response to a trigger signal.

The series compensation unit may comprise fixed series capacitors, i.e., capacitors placed in series on a transmission circuit intended to reduce the overall line impedance and offers improved load division on parallel circuits, system transient and steady state system stability, thereby enabling an increased power transfer capability.

According to a particularly advantageous aspect of the present disclosure, the protection device further comprises an energization circuit electrically connected in series between the series compensation unit and the triggered spark gap, and configured to power the closing of the actuator of the mechanical switch with energy from the series compensation unit upon triggering of the triggered spark gap.

A monitoring and control apparatus associated with the protection device may be configured to monitor disruptions (e.g., faults, overvoltages) on the power line and, in response to detecting a disruption, trigger a bypassing of the SCU. There may be other reasons for bypassing the SCU that are not associated with fault conditions.

During a bypass operation of the protection device, the mechanical switch is arranged to close and thereby form bypass path across the SCU. The closing of the switch is enacted by an actuator of the switch and may be triggered by the monitoring and control apparatus.

**As** the operation of the switch can be slow to respond, the TSG is also triggered (e.g., by the same signal or a separate signal) so as to form an additional bypass path across the SCU and the switch. In this way, the TSG may carry the current flow from the SCU for a short time (milliseconds) until the actuator of the mechanical switch has responded and closed.

By providing a mechanical switch as well as a TSG, a fast response can be achieved via the TSG, without requiring the TSG to bear the entire current flow throughout the bypass operation. Hence, the size of the TSG can be reduced, and the TSG can be easily enclosed in a compact arrangement that is protected from the external environment, and a lower resistance bypass path may be provided by the mechanical switch.

According to comparative examples, each of the mechanical switch and the TSG are powered by dedicated power sources, such as charged capacitors. These charged capacitors may be charged via the power line, thereby requiring complication power conversion connections and substantial isolation between ground and the high-power platform where the SCU is installed to prevent electrical arcing from these power circuits powering the switch and the TSG.

However, according to the claimed approach, power can be provided to the switch (and to the TSG) via power flow from the SCU itself. Viewed from one perspective, the current flow arising from the bypass operation, between the SCU and the TSG upon triggering of the bypass operation, is harnessed by the energization circuit to power the closing of the actuator, thus removing the need for additional power circuits to power the closing of the switch, and thereby substantially simplifying the platform (i.e., the series compensation system).

It will be appreciated that any suitable arrangement of the energization circuit between the SCU and the TSG may allow the energy flow therebetween to be harnessed to power the closing of the switch. In a particular example, the mechanical switch is arranged in a switch branch electrically connected across the terminals of the series compensation unit, the triggered spark gap is arranged in a spark gap branch parallel to the switch branch, and the energization circuit is connected in series between the switch branch and the spark gap branch.

According to this particular arrangement, the energization circuit and the TSG are advantageously removed from the current flow path when the mechanical switch is closed, thereby reducing stress on these components.

The energization circuit may be of any suitable form for harnessing the energy in the current flow from the SCU. In a particular example, the energization circuit comprises an electromagnetic coil energized by the current flow through it. A busbar or inductor may be electrically connected in parallel to the electromagnetic coil to split or otherwise reduce the current through the coil, thus providing additional protection thereto.

In a particular implementation, the actuator is a Thomson-coil-based actuator and the electromagnetic coil forms part of the Thomson-coil-based actuator. A Thomson coil actuator is a type of electromagnetic repulsive drive that can be used as a fast-acting mechanical switch. It comprises a spiral coil and a metallic armature that are repelled by the magnetic field generated by the coil current. The Thomson coil actuator can achieve very high speeds and short reaction times, making it particularly suitable for applications such as hybrid DC circuit breakers.

In some cases, the closing of the actuator of the mechanical switch may fail, e.g., if there is insufficient power drawn from the energization circuit. Hence, in preferred examples, the protection device further comprises a secondary actuator, configured as a redundancy to close the mechanical switch. The secondary actuator may be pneumatically, electromagnetically, or spring-powered.

A position indicator may be included in the protection device, configured to indicate an opening status of the mechanical switch. The position indication may preferably be visible at a distance from the mechanical switch so as to allow for a safe inspection of the system. The position indicator may additionally or alternatively provide information to the secondary actuator such that the secondary actuator can be activated based on the opening status and/or other information.

In some examples, the secondary actuator is further configured to open the mechanical switch. Hence, the (main) actuator of the mechanical switch may only be configured to close the switch, i.e., acting in a single direction. Thus, the secondary actuator may advantageously return the system to a non-bypassed state, ready for another bypass operation.

The secondary actuator may, in some preferred examples, be loaded by the closing of the mechanical switch. Hence, the energy to open the switch (e.g., at a later time) may be stored in the actuator, such as in spring energy or pneumatic pressure. In an example, a pneumatic system may be installed on the ground (i.e., off of the platform where the SCU is installed) and may be connected to the secondary actuator via (non-metallic) hoses, thereby providing a reliable operation with reduced risk of electrical arcing.

The protection device may further include an energy storage, preferably arranged on the same platform as the SCU, configured to power the secondary actuator and/or to provide an electrical trigger signal to the triggered spark gap to thereby trigger the triggered spark gap.

By providing a simple energy storage that can be placed on the platform, which can be connected to the TSG and power its activation, both of the complicated power circuits for the switch and the TSG may advantageously be removed. That is, in preferred examples, both the switch and the TSG are 'self-powered' in the sense that power is derived from the SCU or an energy source(s) that do not require coupling to the power line.

The electrical storage may, in some examples, be as simple as a car battery or the like, and may be formed as a single unit or a plurality of redundant units (e.g., the same or different types of energy storage), and the energy storage is preferably powered/charged via an on-platform power generation unit, such as a solar panel, wind turbine, diesel generator, or the like. In a particular example, the energy storage may be powered via power-over-fiber from the ground to the SCU platform, thus providing a well-isolated connection. Hence, the energy storage may be replenished without intervention from a maintenance crew, thus increasing the reliability and robustness of the SCU system.

In another example, the energy storage is a capacitor of the series compensation unit. That is, the SCU may be split into a main capacitor unit in series an auxiliary capacitor unit, and the auxiliary capacitors may be used as energy storage for, e.g., the Thomson-coil actuator, the trigger for the TSG, and/or the secondary actuator. The auxiliary capacitor(s) may be coupled to their respectively powered components via thyristor switches, preferably light-triggered thyristors capable of being triggered by a laser/light triggering unit.

Put another way, there is further provided, according to another aspect of the present disclosure, a protection device like that described above, but wherein at least one energy storage in the series compensation unit is electrically connected to the energization circuit of the triggered spark gap or the actuator such that the protection device is configured to power the triggering of the triggered spark gap or the closing of the actuator of the mechanical switch with energy from the auxiliary capacitors of the series compensation unit.

A laser (or light) triggering unit may be included in a protection device according to either of the aforementioned aspects, configured to issue a laser trigger signal to the triggered spark gap to thereby trigger the triggered spark gap.

The laser triggering may implement power-over-fiber or may directly trigger the TSG through ionization of a gas arranged between the terminals of the TSG. In either event, it can be seen that the use of laser triggering is a rapid and reliable means for triggering that does not require galvanic connection between the ground and a platform. The laser triggering unit may be connected to a monitory and control apparatus, which may decide if and when a bypass operation is to be triggered.

According to yet a further aspect of the present disclosure, there is provided a series compensation system, comprising a series compensation unit having terminals configured to be electrically connected in series on a power line, and a protection device substantially as described above, electrically connected across the terminals and configured to protect the series compensation unit from fault currents on the power line.

The series compensation system may further comprise an arrestor arranged in an arrestor branch connected across the terminals, wherein the protection device is connected in parallel with the arrestor branch, and/or a damping reactor connected in series between the arrestor branch and the protection device, depending on the implementation.

### Brief Description of the Drawings

One or more example implementations of the present disclosure will be described, by way of example only, and with reference to the following figures, in which:
Figure 1 schematically shows an example series compensation system arranged on a power line;
Figure 2 schematically shows an electrical circuit diagram of an example protection device for a series compensation unit;
Figure 3 schematically shows an example series compensation system on a platform; and
Figure 4 schematically shows another example series compensation system on a platform.

### Detailed Description

The present disclosure is described in the following by way of a number of illustrative examples. It will be appreciated that these examples are provided for illustration and explanation only and are not intended to be limiting on the scope of the present disclosure. Instead, the scope of the present disclosure is defined by the appended claims.

Furthermore, although examples may be presented individually for the sake of focused discussion of particular features, it will be recognized that the present disclosure also encompasses combinations of the examples described herein.

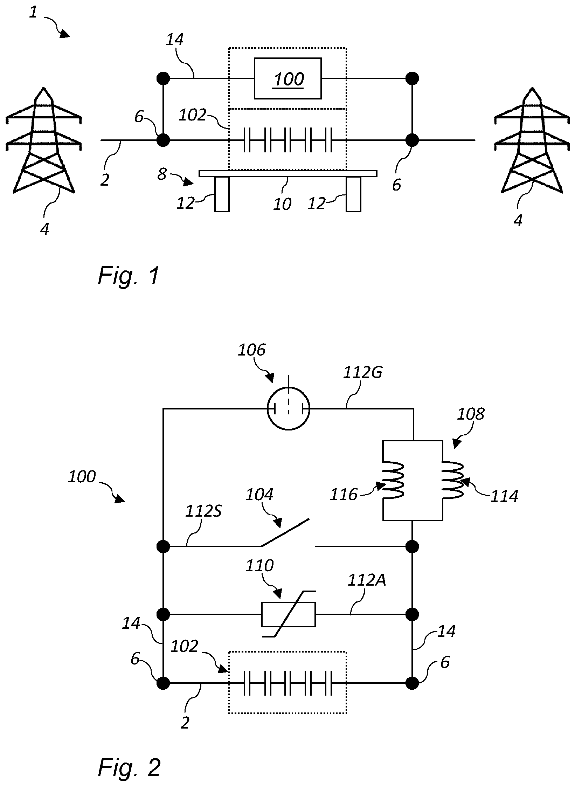

Figure 1 schematically shows an example series compensation system 1 arranged on a power line 2. The power line 2 is part of a power grid transmission network 4. A series compensation unit (SCU) 102 is connected onto the power line 2. More specifically, the SCU 102 comprises a plurality of capacitors connected in series onto the power line 2 via power line coupling terminals 6 (also referred to herein as simply 'terminals 6'). In some examples, the capacitors may be connected in series and in parallel.

The capacitors of the SCU 102 are connected in series on the power line 2 and thus may be at a high voltage, requiring isolation from the ground. The SCU 102 is isolated from ground through being arranged on a platform 8, comprising a platform floor 10 being raised off of the ground by isolating legs 12. Further details of the construction of the platform 8 are less relevant to aspects of the present disclosure. Hence, components that are `on-platform' will be understood as being at a high voltage potential, thus requiring isolation from ground.

During a fault on the power line 2, or otherwise, it may be desired to bypass the SCU 102 to reduce the risk of damage thereto. Accordingly, as shown in figure 1, a protection device 100 is provided and connected across the SCU 102 (i.e., across the terminals 6). The protection device 100 is configured to redirect current on the power line 2 along a bypass path 14.

An example embodiment of the protection device 100 is shown in figure 2 as an electrical diagram. The SCU 102, formed of a plurality of series connected capacitors, is shown connected on the power line 2 with terminals 6, and the bypass path 14 through the protection device is also shown.

As shown in figure 2, the protection device 100 comprises a mechanical switch 104, triggered spark gap (TSG) 106, energization circuit 108, and an arrestor 110.

According to the illustrated example, the mechanical switch 104 is arranged in a switch branch 112S electrically connected across the terminals 6 of the series compensation unit 102, the triggered spark gap 106 is arranged in a spark gap branch 112G parallel to the switch branch 112S, and the energization circuit 108 is connected in series between the switch branch 112S and the spark gap branch 112G.

The illustrated example further comprises the arrestor 110 arranged in an arrestor branch 112A connected across the terminals 6, wherein the protection device 100 (of which the arrestor 110 may not form a part) is connected in parallel with the arrestor branch 112A. In a further example, a damping reactor (not necessarily forming part of the protection device 100) may be connected in series between the arrestor branch 112A and the protection device 100.

The protection device 100 may be signaled to carry out a bypass operation by a monitoring and control apparatus (not shown) and may thereafter redirect current from the power line 2 from passing through the SCU 102 to passing through the bypass path 14.

The bypass operation may comprise controlling the mechanical switch 104 (also referred to as 'switch 104') to close, where the switch 104 comprises an actuator (not shown) that may move to cause a conductive connection across the terminals of the switch 104. This movement of the actuator may be slower than desired in redirecting current from the power line 2, and thus the bypass operation may further comprise triggering the TSG 106 to conduct.

The TSG 106 may be formed as a pair of electrical contacts arranged spaced apart from each other, thus having a gap between them. In some examples, the contacts may be within an enclosure and said enclosure may be pressurized or filled with a gas (e.g., an ionizable gas) such that the gap contains such a gas. Upon triggering of the TSG 106, an electrical spark may be introduced into the gap (e.g., from a power source, a piezoelectrical source), thereby causing an electrical field to be generated in the gap and enabling an electrical arc, and thus low impedance conduction, to form across the gap. The triggering may also be caused by a laser, in some examples. For example, the laser may be incident upon a gas to thereby ionize the gas.

Hence, it will be appreciated that the TSG 106 may rapidly respond to a trigger to generate a low impedance conductive path, and may be faster to form such a conductive path than the switch 104. However, once conducting, the amount of current flowing through the TSG 106 may be high, and thus it is preferable for the TSG 106 to conduct at least until switch 104 has closed, to commutate the current flow to through the switch 104. In this way, the TSG 106 may be dimensioned smaller (i.e., lower rated), as conduction thereacross may only be required for milliseconds or less.

The trigger signal for the switch 104 and the TSG 106 may be the same signal. Advantageously, the energy for closing the actuator of the switch 104 can be derived from the current flow from the SCU 102 to the TSG 106. Hence, as shown in figure 2, the energization circuit 108 is placed in series between the SCU 102 and the TSG 106.

The energization circuit in this example comprises an electromagnetic coil 114 (also referred to herein as 'coil 114'). In some examples, this coil 114 may form part of a Thomson coil actuator. Further, according to this example, the energization circuit 108 comprises multiple branches, with the coil 114 in one branch and an inductor 116 in the other branch (which may be a busbar or similar component). Hence, the current through the coil 114 can be reduced, thus providing protection thereto.

It will be appreciated that the energization circuit 108 may contain different components and may be configured in any suitable way to draw energy from the current flow between the SCU 102 and the TSG 106 to thus power the closing of the actuator of the switch 104 using said energy.

Specifically in this example, the energization circuit 108 is between the switch branch 112S and the TSG 106 such that, when the switch 104 is closed, the energization circuit 108 (and the TSG 106) are removed from the path of the current flow.

It will be appreciated that the specific components used, e.g., their ratings or parameters, can be readily selected depending on the specific implementation. Moreover, further components may be added for redundancy or to provide further functionality to the protection device 100 or the associated system.

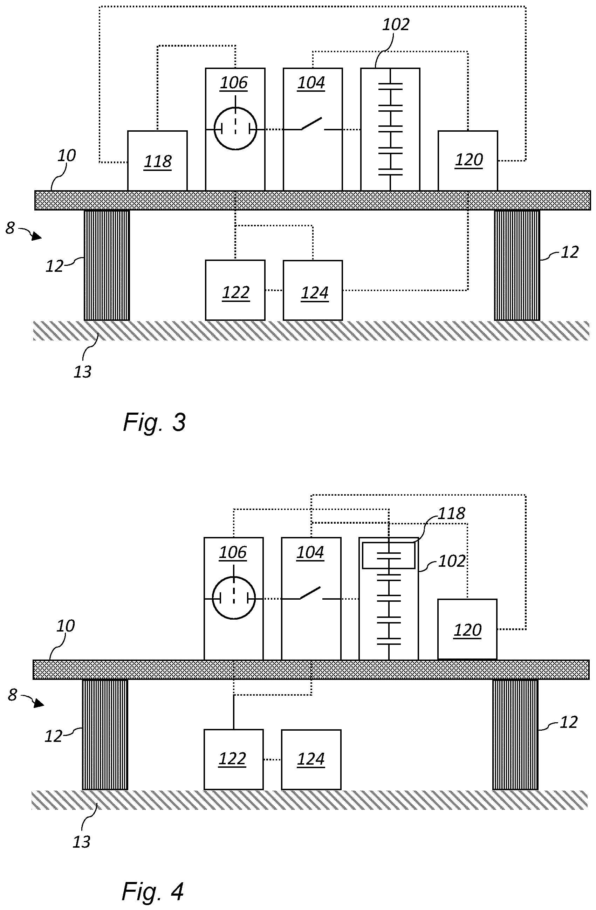

Figures 3 and 4 show two alternative implementations of the protection device 100 for the SCU 102, as installations having some components on a platform 8 (which may be similar to the previously discussed platform in figure 1) and some on ground 13. Components that bear like numbering to previously discussed figures may be the same or similar to the components shown therein, at least in respect of their (intended) functionality. Thus, the details of these components may not be discussed again in detail.

Figure 3 shows an example system comprising an SCU 102 and a protection device comprising a switch 104 and a TSG 106. The electrical connections between these components are not illustrated, and the dotted lines show what may only be some of the functional (e.g., data, electrical) connections between components.

The system shown in figure 3 further comprises an energy storage 118, a secondary actuator 120, a triggering unit 122, and a control and monitoring apparatus 124.

The energy storage may power the triggering of the TSG 106, the secondary actuator 120, and/or other components. The energy storage 118 may be, for example, a battery, a capacitor, or some other form of energy storage, including non-electrical forms of energy storage. The energy storage 118 is shown on the platform 8, but does not draw power from the power line (not shown). Instead, the energy storage 118 may be charged via an on-platform power generator such as a solar panel, wind turbine, or the like.

The connection of the energy storage 118 to the TSG 106 and/or secondary actuator can be through a simply implemented power circuit on the platform 8. With the actuator of the switch 104 being powered by the bypassed current flow from the SCU 102 (via the energization circuit), all power circuits that may be found in comparative examples of series compensation systems can be removed and/or simplified substantially, thereby providing a compact and lower cost arrangement.

The secondary actuator 120 is connected to the switch 104 and configured to close and/or open the actuator of the switch 104. The secondary actuator 120 is powered by the energy storage 118. The secondary actuator 120 may be substantially smaller than the primary actuator of the switch 104, and may have a substantially lower energy demand. In preferred examples, the secondary actuator 120 is configured for repetitive operation (e.g., multiple opening operations, closing operations, or both).

In some examples, the secondary actuator 120 is a redundancy for closing the switch 104, e.g., in case the energization circuit does not provide enough energy to close the switch 104 with the primary actuator. In these examples or other examples, the secondary actuator is configured to open the switch 104 and may preferably be charged/loaded by the closing of the switch 104. Thus, the energization circuit may only be configured to close the switch 104, relying on the secondary actuator 120 to open the switch 104 again to reset the system.

The secondary actuator 120 may be electrically operated (e.g., electromagnetically), and may be the same configuration as the primary actuator. Alternatively, the secondary actuator 120 may be spring or pneumatically powered. For example, if the secondary actuator 120 is pneumatically powered, the pneumatic pressure may be provided via hoses on the ground 13, thereby reducing space occupied on the platform 8 and preserving galvanic isolation from the ground 13.

The triggering unit 122 is connected to the TSG 106 and configured to trigger the TSG using a laser triggering system. The connection to the TSG 106 may be via optical fibers, thereby galvanically isolating the triggering unit 122 on the ground 13 from the TSG 106 on the platform 8.

The triggering unit 122 is controlled by the monitoring and control apparatus 124 (also referred to as the 'controller 124'). The controller 124 is further connected to the TSG 106 and the secondary actuator 120, and it will be appreciated that the controller 124 may be coupled to different and/or other components than those shown to be connected to the controller 124, depending on the configuration.

The controller 124 may be coupled to the power line (not shown) and configured to monitor attributes of, e.g., the voltage and/or current on the power line. If the controller 124 detects, for example, a fault condition or for another reason, the controller 124 may initiate a bypass operation of the protection device. The controller 124 may then generate a signal for the triggering unit 122 to trigger the TSG 106 and/or for the mechanical switch 104 to close. Alternatively, the switch 104 may close in response to the triggering of the TSG 106, for example. The controller 120 may further control the secondary actuator 120 to close and/or open the switch 104, e.g., if the primary actuator fails or cannot itself open the switch 104.

Figure 4 shows an alternative arrangement for a series compensation system, wherein a primary difference from the system shown in figure 3 is that an additional external energy storage 118 is not provided. Instead, the SCU 102 is partitioned into a main partition and an auxiliary partition 118 (each partition comprising one or more of the capacitors of the SCU) acting as an energy storage 118.

The auxiliary partition 118 may provide power to the energization circuit of the primary actuator of the switch 104. The auxiliary partition may further provide power to the TSG 106, and/or the secondary actuator 120, or additional components, depending on the implementation.

Such an arrangement may advantageously reduce the number of components on the platform 8 and simplifies the interconnection of components on the platform 8, among other benefits.

While the present disclosure is susceptible to various modifications and alternative forms, specific embodiments are shown and described above by way of example in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

## Claims

1. A protection device adapted to protect a series compensation unit for a power line, wherein the protection device comprises:
a mechanical switch comprising an actuator, configured to close to thereby bypass the series compensation unit; and
a triggered spark gap electrically connected across the mechanical switch, configured to trigger in response to a trigger signal,
wherein the protection device further comprises:
an energization circuit electrically connected in series between the series compensation unit and the triggered spark gap, and configured to power the closing of the actuator of the mechanical switch with energy from the series compensation unit upon triggering of the triggered spark gap.

2. The protection device according to claim 1, wherein the series compensation unit comprises fixed series capacitors.

3. The protection device according to claim 1 or claim 2, wherein the mechanical switch is arranged in a switch branch electrically connected across the terminals of the series compensation unit, the triggered spark gap is arranged in a spark gap branch parallel to the switch branch, and the energization circuit is connected in series between the switch branch and the spark gap branch.

4. The protection device according to any preceding claim, wherein the energization circuit comprises an electromagnetic coil.

5. The protection device according to claim 4, further comprising a busbar or inductor electrically connected in parallel to the electromagnetic coil.

6. The protection device according to claim 4 or claim 5, wherein the actuator is a Thomson-coil-based actuator and the electromagnetic coil forms part of the Thomson-coil-based actuator.

7. The protection device according to any preceding claim, further comprising a secondary actuator, configured as a redundancy to close the mechanical switch.

8. The protection device according to claim 7, wherein the secondary actuator is pneumatically, electromagnetically, or spring-powered.

9. The protection device according to claim 7 or claim 8, further comprising a position indicator configured to indicate an opening status of the mechanical switch.

10. The protection device according to any of claims 7 to 9, wherein the secondary actuator is further configured to open the mechanical switch.

11. The protection device according to claim 10, wherein the secondary actuator is loaded by the closing of the mechanical switch.

12. The protection device according to any preceding claim, further comprising an energy storage configured to power the secondary actuator and/or to provide an electrical trigger signal to the triggered spark gap to thereby trigger the triggered spark gap.

13. The protection device according to claim 12, wherein the energy storage is powered via an on-platform power generation unit.

14. The protection device according to claim 12, wherein the energy storage is configured to provide an electrical trigger signal to the triggered spark gap to thereby trigger the triggered spark gap, and wherein the energy storage is a capacitor of the series compensation unit.

15. The protection device according to any preceding claim, further comprising a laser triggering unit configured to issue a laser trigger signal to the triggered spark gap to thereby trigger the triggered spark gap.

16. A protection device adapted to protect a series compensation unit for a power line, wherein the protection device comprises:
a mechanical switch comprising an actuator, configured to close to thereby bypass the series compensation unit; and
a triggered spark gap electrically connected across the mechanical switch, configured to trigger in response to a trigger signal,
wherein at least one energy storage in the series compensation unit is electrically connected to the actuator such that the protection device is configured to power the closing of the actuator of the mechanical switch with energy from the series compensation unit.

17. The protection device according to claim 16, wherein the energy storage is further electrically connected to the triggered spark gap and configured to power the triggering of the triggered spark gap.

18. A series compensation system, comprising:
a series compensation unit having terminals configured to be electrically connected in series on a power line; and
the protection device according to any of claims 1 to 17 electrically connected across the terminals and configured to protect the series compensation unit from fault currents on the power line.

19. The series compensation system according to claim 18, further comprising an arrestor arranged in an arrestor branch connected across the terminals, wherein the protection device is connected in parallel with the arrestor branch; and/or a damping reactor connected in series between the arrestor branch and the protection device.
